# EUROPÄISCHE PATENTSCHRIFT

(11) **EP 2 674 206 B1**
(45) Veröffentlichungstag und Bekanntmachung des Hinweises auf die Patenterteilung: **23.03.2016**
(21) Anmeldenummer: 13002918.4
(22) Anmeldetag: 06.06.2013
(51) Int. Cl.: B01D 3/00, B01D 3/20, B01D 53/18, F25J 3/04

(54) **Niedriglastverteiler**
Low load distributor
Distributeur à faible charge

(30) Priorität: 11.06.2012 DE 102012011553
(43) Veröffentlichungstag der Anmeldung: 18.12.2013
(73) Patentinhaber: RVT Process Equipment GmbH, 96349 Steinwiesen (DE)
(72) Erfinder: Geipel, Werner, 96349 Steinwiesen (DE); Franz, Uwe, 96346 Wallenfels (DE)
(74) Vertreter: Grünecker Patent- und Rechtsanwälte PartG mbB

(56) Entgegenhaltungen:
- DE-A1-102010 009 292
- US-A- 4 648 972
- US-A- 4 846 266
- US-A1- 2004 182 013

## Beschreibung

Die vorliegende Erfindung betrifft einen Niedriglastverteiler für Stoffaustauschkolonnen zum Aufbringen von Flüssigkeit auf die Oberfläche von Packungsstufen der Stoffaustauschkolonnen mit mindestens einer Flüssigkeitszufuhr, mit einer Mehrzahl von Rinnen, wobei die Flüssigkeitszufuhr in die Rinnen mündet und die Rinnen Austrittsstellen für die Flüssigkeit aufweisen, mit einer Vielzahl von Flüssigkeitsabgabestellen und zwischen der Flüssigkeitszufuhr und den Flüssigkeitsabgabestellen angeordneten Verweilzeitverzögerungseinrichtungen, die aufnahmefähiges, offenporiges Speichermaterial umfassen.

Füllkörperschüttungen und geordnete Packungen in Stoffaustauschkolonnen müssen durch geeignete Flüssigkeitsverteilvorrichtungen berieselt werden. Dabei hängt die erreichbare Trennleistung der Stoffaustauschkolonne von der Qualität der Flüssigkeitsverteilung ab. Um einen intensiven Stoffaustausch zwischen den Phasen sicherzustellen, ist der Flüssigkeitsstrom über dem gesamten Arbeitsbereich gleichmäßig auf den Kolonnenquerschnitt zu verteilen. Dabei wird die Flüssigkeit auf einzelne Tropfstellen verteilt. Die Tropfstellen müssen homogen über dem Kolonnenquerschnitt angeordnet sein. Aus jeder Tropfstelle soll die gleiche Flüssigkeitsmenge abgegeben werden. Insbesondere bei Niedriglastbetrieb bei dem der Flüssigkeitsvolumenstrom bezogen auf den Kolonnenquerschnitt etwa 0,05 bis 1 m³/(m²h) beträgt, ist eine gleichmäßige Verteilung problematisch.

Aus der DE 33 46 857 C2 ist bereits ein Flüssigkeitsverteiler für den Niedriglastbetrieb bekannt. Der Flüssigkeitsverteiler umfasst eine an eine Zulaufleitung angeschlossene Vorverteilereinrichtung, die in mehrere Verteilereinrichtungen mündet, wobei die Verteilereinrichtungen jeweils wenigstens eine Flüssigkeitsaustrittsöffnung aufweisen. Die Flüssigkeitsaustrittsöffnungen stehen mit einem Körper in Verbindung, der an der Außenseite der Verteilereinrichtungen angebracht ist und aus einem durch die Flüssigkeit benetzbaren saugfähigen, offenporigen Material mit innerer zusammenhängender Porenstruktur besteht. Der Körper ist derart an der Verteilereinrichtung angebracht, dass die gesamte aus den Flüssigkeitsaustrittsöffnungen austretende Flüssigkeit die innere Porenstruktur des Körpers durchströmt, bevor sie an die Stoffaustauschkolonne abgegeben wird.

Ein weiterer Feinverteiler ist aus der EP 1 459 793 B1 bekannt. Der Feinverteiler umfasst einen Hauptkanal, der Flüssigkeit auf eine Vielzahl von darunter angeordneten Feinverteilerelementen aufbringt. Jedes Feinverteilerelement umfasst einen Kanal, der in seiner Wand Austrittsausöffnungen für die Flüssigkeit aufweist. Unterhalb des Kanals ist je eine Verteilerrinne angeordnet, die in etwa parallel zu dem Kanal verläuft. Ausgehend von dem Kanal erstreckt sich ein flächenartiges Leitmittel zum Leiten der Flüssigkeit, die aus den Austrittsöffnungen austritt, zu der zugeordneten Verteilerrinne. Die Verteilerrinne wird durch zwei Blechflanken ausgebildet, die einen sich nach unten verjüngenden Spalt ausbilden. Das flächenartige Leitmittel erstreckt sich durch diesen Bereich hindurch und bildet unterhalb der Verteilerrinne Abtropfstellen für die Flüssigkeit.

Weitere Flüssigkeitsverteiler zum Aufbringen und Verteilen von Flüssigkeiten in Kolonnen zum Stoff- und/oder Wärmeaustausch sind in der US 2005/0189663 A1, der US 4,816,191 und der US 1,113,643 gezeigt.

Die DE 102010009292 A1 zeigt einen Gas-Flüssigkeitsverteiler für ein zweiphasiges Feed. Zur besseren Phasentrennung vor der Aufgabe des Gases und der Flüssigkeit auf eine Kolonne ist in dem Verteiler eine Materialschicht angeordnet, an der die Gasphase sammeln und aufsteigen kann.

Die US 4,846,266 zeigt einen Flüssigkeitsverteiler für einen Plattenwärmetauscher.

Zudem sind sogenannte Anstaupackungen bekannt. Beispiele dafür sind in der WO 2011/015352 A1, der DE 100 10 810 A1, der DE 103 43 649 A1, der DE 103 43 650 A1 und der DE 10 2004 056419 A1 beschrieben. Diese Anstaupackungen sind ein Teil der in einer Kolonne angeordneten geordneten Packung und weisen einen höheren Strömungswiderstand für die Flüssigkeit auf, so dass die Flüssigkeit angestaut wird. Diese Anstaupackungen funktionieren nur, wenn ein Gasstrom im Gegenstrom zur Flüssigkeit durch die Kolonne strömt. Solche Anstaupackungen ersetzen keine primären Flüssigkeitsverteiler, mit denen Flüssigkeit in eine Kolonne eingebracht wird.

Trotz der bereits bekannten Möglichkeiten ist es weiterhin schwierig, eine gleichmäßige Flüssigkeitsverteilung bei Niedriglastbetrieb zu erreichen. Zudem ist bei Niedriglastverteilern schwierig, dass bei vorgegebener Tropfstellenzahl die Größe der Bohrungen bzw. Schlitze für den Flüssigkeitsaustritt extrem klein wird. Dadurch wird die Fertigung extrem schwierig, die Betriebssicherheit wird stark eingeschränkt.

Es ist daher die Aufgabe der vorliegenden Erfindung, einen weiter verbesserten Niedriglastverteiler bereitzustellen, der eine homogene Flüssigkeitsverteilung über den Kolonnenquerschnitt einer Stoffaustauschkolonne ermöglicht, einfach gefertigt werden kann und eine gute Betriebssicherheit aufweist.

Hierzu ist erfindungsgemäß vorgesehen, dass der Strömungswiderstand des Speichermaterials in Strömungsrichtung der Flüssigkeit, d.h. ausgehend von der Flüssigkeitszufuhr in Richtung der Flüssigkeitsabgabestellen, zunimmt, wobei die Porengröße des Speichermaterials in Strömungsrichtung der Flüssigkeit abnimmt.

Durch den zunehmenden Strömungswiderstand des Speichermaterials staut sich die Flüssigkeit in dem Niedriglastverteiler an und kann nicht sofort durch die Flüssigkeitsabgabestellen abfließen. Dies bewirkt eine gute Querverteilung der aufgegebenen Flüssigkeit über den Kolonnenquerschnitt, wodurch die gewünschte gleichmäßige Aufbringung der Flüssigkeit auf die gesamte Oberfläche der Packungsstufen erreicht wird. Durch die Rinnen wird eine primäre Querverteilung der Flüssigkeit vor dem Eintritt in die Verweilzeitverzögerungseinrichtungen erreicht. Das poröse Speichermaterial ist durch die zu verteilende Flüssigkeit benetzbar und saugfähig. Das Speichermaterial weist eine offene innere Porenstruktur auf, d.h. die Poren sind miteinander verbunden, so dass die Flüssigkeit durch das Speichermaterial hindurchfließen kann. Somit muss im Wesentlichen die gesamte aus den Flüssigkeitsabgabestellen austretende Flüssigkeit die innere Porenstruktur passiert haben, bevor sie aus den Flüssigkeitsabgabestellen austritt. Das poröse Speichermaterial ist so ausgebildet, dass im Bereich der Flüssigkeitszufuhr größere Poren angeordnet sind und die Flüssigkeit schneller abfließen kann. In Richtung der Flüssigkeitsabgabestellen nimmt die Porengröße ab. Die Flüssigkeit staut sich. Im Bereich der Flüssigkeitszufuhr kann die Flüssigkeit also schnell zu den Seiten abfließen, im Bereich nahe der Flüssigkeitsabgabestellen wird eine gute Querverteilung durch den Kapillareffekt erzielt. Dadurch wird eine sehr homogene Flüssigkeitsverteilung über den gesamten Kolonnenquerschnitt erreicht.

Ferner kann auch vorgesehen werden, dass das Speichermaterial aus mindestens zwei Schichten besteht und die weiter entfernt von der Flüssigkeitszufuhr angeordnete zweite Schicht eine größere Dichte aufweist als die näher an der Flüssigkeitszufuhr angeordnete erste Schicht. Die beiden Schichten verlaufen also im Wesentlichen quer zur Strömungsrichtung. Jede der Schichten kann dann einheitlich ausgebildet sein und im Wesentlichen konstante Porengröße haben. Durch die beiden Schichten ist es sehr einfach, die Porengröße in Strömungsrichtung der Flüssigkeit zu verändern.

Gemäß einer weiteren Ausführungsform der Erfindung kann vorgesehen werden, dass zwischen der ersten Schicht aus Speichermaterial und der zweiten Schicht aus Speichermaterial ein erstes Wehr mit voneinander beabstandeten Flüssigkeitsdurchlässen angeordnet ist. In einer sehr einfachen Ausgestaltung kann als Wehr ein Lochblech eingesetzt werden. Durch dieses Wehr wird zwischen der ersten Schicht aus Speichermaterial und der zweiten Schicht aus Speichermaterial eine erste Querverteilung erzwungen.

Es kann auch vorgesehen werden, dass in Strömungsrichtung der Flüssigkeit nach dem Speichermaterial ein zweites Wehr angeordnet ist, das voneinander beabstandete Tropfendurchtrittsstellen aufweist. Dadurch wird eine nochmalige Querverteilung der Flüssigkeit vor dem endgültigen Abtropfen auf die Packungsstufen in der Stoffaustauschkolonne erreicht.

Vorteilhafterweise kann ferner vorgesehen werden, dass die Austrittsstellen für die Flüssigkeit in den Seitenwänden der Rinnen beabstandet vom Rinnenboden angeordnet sind. Dadurch wird ein festgelegter Flüssigkeitsstand in jeder Rinne erzwungen, die punktförmig aufgegebene Flüssigkeit verteilt sich über den gesamten Querschnitt der Rinne. Die erhöhten Austrittsstellen führen zu einer hohen Verweilzeit der Flüssigkeit in der Rinne und zu geringer Fließgeschwindigkeit. Eventuell in der Flüssigkeit enthaltene Verunreinigungen, beispielsweise Feststoffe, setzen sich ab und strömen nicht in die Stoffaustauschkolonne ein.

Vorteilhafterweise kann das Speichermaterial in Strömungsrichtung hinter den Austrittsstellen angeordnet sein. Das Speichermaterial kann dann einfach an den Außenseiten der Seitenwände der Rinnen befestigt werden. Die Flüssigkeit, die durch das Speichermaterial strömt, ist bereits geklärt und weist nur noch wenig Feststoffe auf, so dass die Gefahr eines Verstopfens des Speichermaterials deutlich verringert wird.

Gemäß einer weiteren Ausführungsform kann vorgesehen werden, dass an den Rinnen benachbart zu den Austrittsstellen Leitbleche angeordnet sind und das Speichermaterial zwischen der Seitenwand der Rinne und dem jeweiligen Leitblech angeordnet ist. Durch die Leitbleche wird die Flüssigkeit zusätzlich in die gewünschte Richtung geführt. Zudem ist eine einfache Befestigung des Speichermaterials möglich.

Vorteilhafterweise können die Leitbleche an ihren von den Rinnen abgewandten Enden mit Zacken versehen sein. Durch diese Zacken werden Abtropfstellen für die Flüssigkeit ausgebildet. Es ist auch denkbar, dass diese Abtropfstellen andere Formen aufweisen, und beispielsweise abgerundet sind.

Gemäß noch einer weiteren Ausführungsform kann vorgesehen werden, dass jedes Leitblech gebogen ist und eine Verlängerung der zugehörigen Rinne ausbildet, das zweite Wehr parallel zur Seitenwand und in Verlängerung der jeweiligen Rinne verläuft und im unteren Bereich mit dem Leitblech verbunden ist, wobei an der Verbindungsstelle zwischen dem Leitblech und dem zweiten Wehr Halblöcher vorgesehen sind, die die Tropfendurchtrittsstellen ausbilden. Durch diese Halblöcher wird ein geringer Flüssigkeitsdurchtritt erreicht, es ist eine relativ einfache Fertigung der Flüssigkeitsdurchtrittsstellen möglich. Die Anzahl und die Anordnung der Halblöcher entsprechen bereits der endgültigen Geometrie der Flüssigkeitsabgabestellen, d.h. der Tropfstellen.

Eine gute Führung der Flüssigkeit zu den gewünschten Flüssigkeitsabgabestellen kann dadurch erzielt werden, das das Leitblech Rillen zur Flüssigkeitsführung aufweist, wobei die Rillen von den Halblöchern zu den Flüssigkeitsabgabestellen verlaufen.

In noch einer weiteren Ausgestaltung kann vorgesehen werden, dass jedes der Leitbleche an seinem oberen Ende mit Notüberlaufsöffnungen versehen ist. Dadurch wird auch bei einem Überlauf des Verteilers eine gleichmäßige Verteilung der Flüssigkeit über die gesamte Rinnenlänge und somit über den gesamten Kolonnenquerschnitt erreicht.

Es kann ferner auch vorgesehen werden, dass in Strömungsrichtung vor dem Speichermaterial ein oberes Abtropfzentrierblech angeordnet ist. Durch dieses Abtropfzentrierblech wird eine Querverteilung vor dem Eintritt der Flüssigkeit in das Speichermaterial erzielt.

In einer weiteren Ausführungsform kann vorgesehen werden, dass jede der Rinnen einzeln nivellierbar ist. Durch diese Nivellierungsmöglichkeit jeder Rinne wird eine exakte horizontale Ausrichtung jeder Rinne erzielt. Es gibt daher innerhalb der einzelnen Rinnen keine Unterschiede in der Stauhöhe, wodurch ein sehr gleichmäßiger Flüssigkeitsaustritt erreicht wird. Qualitätsminderungen in der Flüssigkeitsverteilung werden dadurch vermieden.

Im Folgenden wird die Erfindung anhand von Zeichnungen näher erläutert.

Es zeigen:
- Fig. 1: schematische Darstellung eines Flüssigkeitsverteilers;
- Fig. 2: Seitenansicht eines Abschnitts einer Rinne des erfindungsgemäßen Niedriglastverteilers; und
- Fig. 3: Schnitt durch die Rinne aus Fig. 2 entlang der Linie III-III.

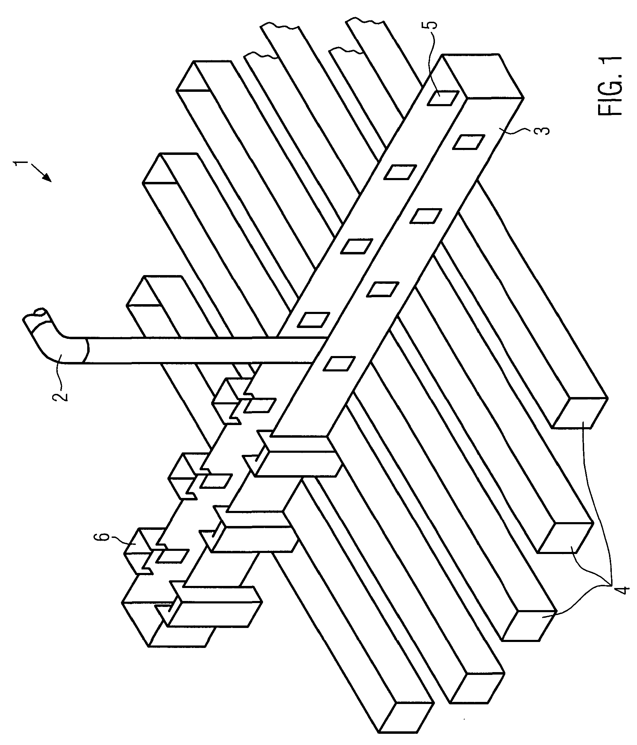

Fig. 1 zeigt eine schematische Darstellung eines Niedriglastverteilers 1. Der Niedriglastverteiler 1 dient zum gleichmäßigen Aufbringen von Flüssigkeit auf die Oberfläche von Packungsstufen von Stoffaustauschkolonnen, die im Niedriglastbetrieb betrieben werden. Unter Niedriglastbetrieb ist hierbei zu verstehen, dass der Flüssigkeitsvolumenstrom, bezogen auf den Kolonnenquerschnitt, in einem Bereich von etwa 0,05 bis 1 m³/(m²h) liegt. Die Flüssigkeit wird von dem Niedriglastverteiler auf Flüssigkeitsabgabestellen (Tropfstellen) verteilt. Die Anzahl der Tropfstellen (Tropfstellendichte) wird vom verfahrenstechnischen Prozess vorgegeben. Üblich ist eine Tropfstellendichte von 60 bis 150/m². In der Stoffaustauschkolonne wird die Flüssigkeit mit einem Gasstrom in Kontakt gebracht, um den Stoffaustausch zu ermöglichen. Dabei soll eine möglichst große Oberfläche bereitgestellt werden, an der Gas und Flüssigkeit miteinander in Kontakt treten. Zu diesem Zweck sind in der Kolonne Packungsstufen, beispielsweise Füllkörperschüttungen oder geordneten Packungen, angeordnet.

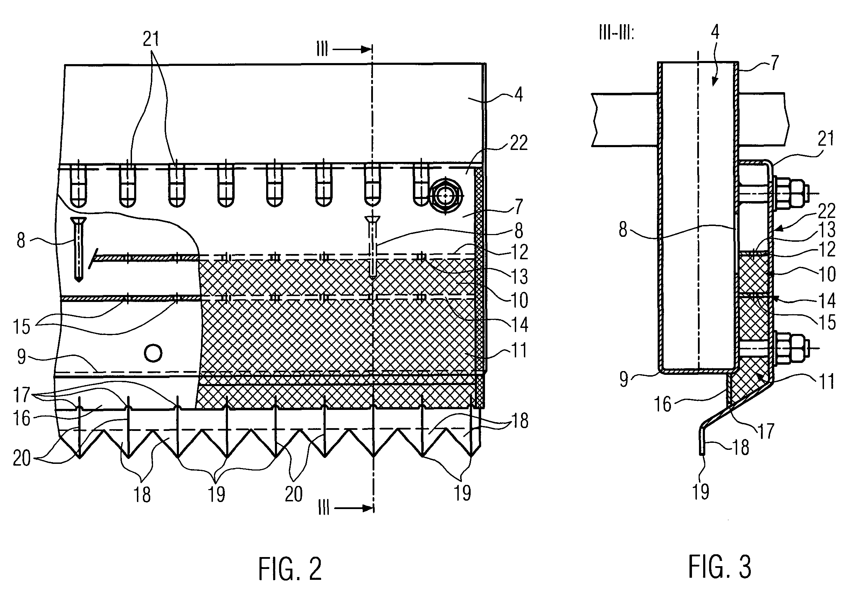

Der Niedriglastverteiler 1 umfasst eine Flüssigkeitszufuhr 2, im dargestellten Fall lediglich ein Aufgaberohr. Die Flüssigkeitszufuhr 2 mündet in einen Hauptkanal 3. Unterhalb des Hauptkanals 3 sind Rinnen 4 angeordnet, die quer zum Hauptkanal 3 verlaufen. Der Hauptkanal 3 weist in seinen Seitenwänden Öffnungen 5 aus, die den Rinnen 4 zugeordnet sind, und durch die die in den Hauptkanal aufgegebene Flüssigkeit in die Rinnen 4 überströmt. Im dargestellten Fall sind die Öffnungen 5 mit Leitstrukturen 6 überdeckt, die dafür sorgen, dass die Flüssigkeit aus dem Hauptkanal 3 in die Rinnen 4 übertritt. Die Rinnen 4 wiederum stehen mit Flüssigkeitsabgabestellen 19 (siehe Fig. 2 und 3) in Verbindung, durch die die Flüssigkeit auf die Packungsstufen abgegeben wird. Zwischen der Flüssigkeitszufuhr 2 und den Flüssigkeitsabgabestellen 19 sind Verweilzeitverzögerungseinrichtungen angeordnet, die dafür sorgen, dass der Strömungswiderstand auf die Flüssigkeit ausgehend von der Flüssigkeitszufuhr in Richtung der Flüssigkeitsabgabestellen zunimmt und somit eine gute Querverteilung der Flüssigkeit im Niedriglastverteiler erreicht wird. In Fig. 1 ist der Niedriglastverteiler nur schematisch dargestellt, die Verweilzeitverzögerungseinrichtungen sind nicht gezeigt.

Fig. 2 zeigt eine Vergrößerung eines Ausschnitts einer Rinne 4 aus Fig. 1 in Seitenansicht. Die Rinne 4 ist ein U-förmiger Kanal, der an beiden Stirnseiten geschlossen ist. In einer der Seitenwände 7 der Rinne 4 sind voneinander beabstandete Schlitze 8 ausgebildet. Die Schlitze 8 bilden Austrittsstellen für die Flüssigkeit aus und können auch beliebige andere Formen aufweisen, wie z.B. Kreisform etc. Der Abstand der Schlitze 8 voneinander ist derart festgelegt, dass sich bei vorgegebenem Flüssigkeitsvolumenstrom durch den Verteiler eine fertigungstechnisch sinnvolle Breite bzw. ein sinnvoller Durchmesser der Schlitze ergibt. Die Schlitze 8 in der Seitenwand 7 der Rinne 4 sind oberhalb des Rinnenbodens 9 angeordnet. Die in die Rinne 4 eintretende Flüssigkeit muss daher erst einen gewissen Flüssigkeitsstand erreicht haben, bevor sie durch die Schlitze 8 austreten kann. Dies führt dazu, dass die Verweilzeit der Flüssigkeit in der Rinne 4 erhöht wird. Es werden also festgelegte Flüssigkeitsstände in den Rinnen erzwungen, so dass sich die meist punktförmig aufgegebene Flüssigkeit über den gesamten Querschnitt der Rinnen verteilt. Dies führt zu sehr hohen Verweilzeiten der Flüssigkeit im Verteiler, die Fließgeschwindigkeit der Flüssigkeit ist gering. Eventuell in der Flüssigkeit enthaltende Feststoffe können sich absetzen, wodurch eine Verunreinigung der nachfolgenden Bauteile des Flüssigkeitsverteilers und der Stoffaustauschkolonne verringert wird.

Die Rinnen 4 sind derart ausgebildet, dass jede einzelne Rinne nivellierbar ist. Dadurch wird eine exakte horizontale Ausrichtung der Rinnen 4 und somit der in den Rinnen 4 angebrachten Schlitze 8 ermöglicht. Die durch die Flüssigkeitszufuhr 2 aufgegebene Flüssigkeit verteilt sich also in den Rinnen 4 und tritt durch die Schlitze 8 aus den Rinnen 4 aus. In Strömungsrichtung der Flüssigkeit hinter den Schlitzen 8 ist Speichermaterial 10, 11 angeordnet. Das Speichermaterial 10, 11 erstreckt sich über die gesamte Länge der jeweiligen Rinne 4. Bei dem Speichermaterial 10, 11 handelt es sich um ein aufnahmefähiges, offenporiges Material, das mit der Flüssigkeit, die aufgegeben wird, benetzbar ist. Das Speichermaterial weist eine innere zusammenhängende Porenstruktur auf und ist saugfähig, so dass im Wesentlichen die gesamte durch den Niedriglastverteiler strömende Flüssigkeit durch die innere Porenstruktur des Speichermaterials fließen muss, bevor sie aus dem Niedriglastverteiler austritt. Als Speichermaterial können saugfähige Materialien z.B. gewebte oder ungewebte Textilmaterialien, Schaumstoffe oder keramische oder oxidkeramische Sinterwerkstoffe eingesetzt werden. Die eingesetzten Materialien müssen selbstverständlich beständig gegen die Einsatzbedingungen in der Kolonne sein und dürfen durch die Einsatzstoffe und Temperaturen nicht zersetzt oder geschmolzen werden.

Das Speichermaterial 10, 11 ist derart ausgebildet, dass der Strömungswiderstand der Flüssigkeit zunimmt. Die kann z.B. dadurch erfolgen, dass die Porengröße des Speichermaterials in Strömungsrichtung der Flüssigkeit abnimmt. Das Speichermaterial besteht daher aus einer ersten Schicht 10 und einer zweiten Schicht 11. Die erste Schicht 10 ist in Strömungsrichtung der Flüssigkeit vor der zweiten Schicht 11 und nach den Schlitzen 8 angeordnet. Die erste Schicht 10 weist eine geringere Dichte auf als die zweite Schicht 11. Dadurch kann sich die einströmende Flüssigkeit in der ersten Schicht 10 schneller querverteilen als in der zweiten Schicht 11. In der zweiten Schicht 11 ist die Dichte höher und somit auch die Porengröße kleiner. Dadurch wird eine Querverteilung durch den Kapillareffekt erzielt. Oberhalb der ersten Schicht 10 ist ein Abtropfzentrierblech 12 angeordnet. Das Abtropfzentrierblech 12 weist voneinander beabstandete Durchtritte 13 auf durch die die Flüssigkeit, die aus den Schlitzen 8 austritt, in die erste Schicht 10 überströmt.

An der Seitenwand 7 jeder Rinne 4 ist ferner ein Leitblech 22 angebracht. Das Leitblech 22 ist insbesondere in Fig. 3 gut zu sehen. Auch das Leitblech 22 erstreckt sich im Wesentlichen über die gesamte Länge der jeweiligen Rinne 4. Zwischen der ersten Schicht aus Speichermaterial 10 und der zweiten Schicht 11 aus Speichermaterial ist ein erstes Wehr 14 angeordnet. Dieses Wehr 14 weist voneinander beabstandete Flüssigkeitsdurchlässe 15 auf. Durch dieses Wehr 14 wird die nochmalige Querverteilung der Flüssigkeit zwischen der ersten Schicht 10 und der zweiten Schicht 11 ermöglicht. In Strömungsrichtung hinter der zweiten Schicht 11 aus Speichermaterial ist ein zweites Wehr 16 angebracht. Dieses zweite Wehr 16 verläuft parallel zur Seitenwand 7 der Rinne 4 und ist mit dem Rinnenboden 9 sowie mit dem Leitblech 22 verbunden. Im unteren Bereich weist dieses zweite Wehr 16 voneinander beabstandete Tropfendurchtrittsstellen 17 auf. Im dargestellten Beispiel haben die Tropfendurchtrittsstellen 17 die Form von Halbkreisen. Das Leitblech 22 erstreckt sich weiter nach unten und ist an seinem unteren Bereich mit Zacken 18 versehen. Die Spitzen der Zacken 18 bilden die Flüssigkeitsabgabestellen 19 für die durch den Verteiler durchströmende Flüssigkeit aus. Ferner ist das Leitblech 22 mit Rillen 20 versehen, die von den Tropfendurchtrittsstellen 17 zu den Flüssigkeitsabgabestellen 19 verlaufen. Durch diese Rillen 20 wird die Flüssigkeit ausgehend von dem zweiten Wehr 16 und den darin angeordneten Tropfendurchtrittsstellen 17 gezielt zu den Flüssigkeitsabgabestellen 19 geleitet. Die Geometrie der Flüssigkeitsabgabestellen 19 wird durch die unter dem Verteiler 1 angeordnete Packungsstufe festgelegt.

Fig. 3 zeigt einen Schnitt durch die Rinne 4 aus Fig. 2 entlang der Linie III-III. Es ist deutlich zu erkennen, dass die Rinne 4 einen U-förmigen Querschnitt mit Seitenwänden 7 und einem Rinnenboden 9 aufweist. Die seitlichen Schlitze 8 sind beabstandet vom Rinnenboden 9 angeordnet. Das Leitblech 22 ist an der Seitenwand 7 der Rinne 4 angebracht, in der auch die Schlitze 8 angeordnet sind. Im oberen Bereich erstreckt sich das Leitblech 22 etwa senkrecht von der Seitenwand 7 der Rinne 4 nach außen, knickt dann nach unten ab und verläuft parallel zur Seitenwand 7 der Rinne 4. Im Bereich des Knicks ist ein Notüberlauf 21 angeordnet, so dass bei zu starker Flüssigkeitszufuhr Flüssigkeit durch diesen Notüberlauf austreten kann. Das Leitblech 22 erstreckt sich parallel zur Seitenwand 7 der Rinne 4 nach unten und ragt ein Stück weiter über den Rinnenboden 9 nach unten hinaus. Dort knickt das Leitblech wieder in Richtung der Rinne 4 ab, wobei der Winkel zwischen dem parallel verlaufenden Stück und dem abgeschrägten Stück ein stumpfer Winkel ist. Das Leitblech 22 wird soweit weitergeführt, bis es in etwa zur Mitte der Rinne reicht und knickt dort ab, dass es senkrecht nach unten ragt und wieder in etwa parallel zur Seitenwand 7 der Rinne 4 verläuft. Durch das Leitblech 22 wird also neben der Rinne ein kastenförmiger Bereich, in Form einer zweiten Rinne, ausgebildet. In diesem kastenförmigen Bereich ist das Speichermaterial 10, 11 angebracht.

Zwischen der Seitenwand 7 der Rinne 4 und dem Leitblech 22 erstreckt sich oberhalb der ersten Schicht 10 aus Speichermaterial ein Abtropfzentrierblech 12. Das Abtropfzentrierblech 12 verläuft etwa senkrecht zur Seitenwand 7 und somit parallel zum Rinnenboden 9. Das Abtropfzentrierblech 12 ist mit voneinander beabstandeten Flüssigkeitsdurchlässen 13 versehen. Beispielsweise kann ein Lochblech verwendet werden. Das Abtropfzentrierblech ist auf Höhe der Schlitze 8 angeordnet und kann vom unteren Rand der Schlitze 8 nach oben beabstandet sein. Flüssigkeit, die durch die Schlitze 8 austritt, strömt somit auf das Abtropfzentrierblech 12, wird durch querverteilt und tritt dadurch die Flüssigkeitsdurchlässe 13 in die erste Schicht 10 aus Speichermaterial ein.

Zwischen der ersten Schicht 10 aus Speichermaterial und der zweiten Schicht 11 aus Speichermaterial ist ein erstes Wehr 14 angeordnet. Dieses erste Wehr 14 weist ebenfalls voneinander beabstandete Flüssigkeitsdurchlässe 15 auf, so dass durch dieses Wehr eine nochmalige Querverteilung der Flüssigkeit erzielt wird. Das Wehr 14 verläuft parallel zum Abtropfzentrierblech 12. Auch dieses Wehr 14 kann einfach aus Lochblech hergestellt werden.

Wie bereits beschrieben weist die zweite Schicht 11 aus Speichermaterial eine größere Dichte auf als die erste Schicht 10 aus Speichermaterial. Die Porengröße der zweiten Schicht 11 aus Speichermaterial ist kleiner als die der ersten Schicht 10, der Strömungswiderstand der Flüssigkeit durch diese zweite Schicht 11 ist daher größer. In der zweiten Schicht 11 aus Speichermaterial wird durch den Kapillareffekt eine nochmalige Querverteilung der durch den Verteiler 1 durchströmenden Flüssigkeit erreicht. Die Schichthöhe der zweiten Schicht 11 aus Speichermaterial ist größer als die Schichthöhe der ersten Schicht 10 aus Speichermaterial und beträgt in etwa das Doppelte bis das Dreifache.

In Strömungsrichtung hinter der zweiten Schicht 11 aus Speichermaterial ist das zweite Wehr 16 angeordnet. Das zweite Wehr 16 erstreckt sich unterhalb der Rinne 4 in etwa parallel zur Seitenwand 7 und ist an einem Ende mit der Rinne 4 und am anderen Ende mit dem Leitblech 22 verbunden. Im unteren Bereich, also an der Verbindung mit dem Leitblech 22, ist das zweite Wehr 16 mit Tropfendurchtrittsstellen 17 versehen. Die Anzahl und Anordnung der Tropfendurchtrittsstellen 17 entsprechen der endgültigen Flüssigkeitsabgabestellengeometrie. Die Tropfendurchtrittsstellen 17 sind vorzugsweise halbkreisförmig. An seinem unteren Ende ist das Leitblech 22 zackenförmig ausgebildet, wie in Fig. 2 gut zu sehen ist. An der Innenseite des Leitblechs 22 sind Rillen 20 ausgebildet, die die Tropfendurchtrittsstellen 17 mit den Spitzen der Zacken 18 verbinden und so eine Führung der Flüssigkeit bewirken. Die endgültigen Flüssigkeitsabgabestellen 19 werden durch die Spitzen der Zacken 18 ausgebildet. Durch das Zusammenspiel der beschriebenen Einrichtungen, d.h. die Rinnen 4, das Abtropfzentrierblech 12, die beiden Schichten 10, 11 aus Speichermaterial, die beiden Wehre 14, 16, der Rillen 20 und der Zacken 18 wird die Verweilzeit der Flüssigkeit in dem Niedriglastverteiler verlängert und die Flüssigkeit verteilt sich gleichmäßig über den Kolonnenquerschnitt.

## Patentansprüche

1. Niedriglastverteiler (1) für Stoffaustauschkolonnen zum Aufbringen von Flüssigkeit auf die Oberfläche von Packungsstufen der Stoffaustauschkolonnen mit mindestens einer Flüssigkeitszufuhr (2), mit einer Mehrzahl von Rinnen (4), wobei die Flüssigkeitszufuhr (2) in die Rinnen (4) mündet und die Rinnen (4) Austrittsstellen (8) für die Flüssigkeit aufweisen, mit einer Vielzahl von Flüssigkeitsabgabestellen (19) und zwischen der Flüssigkeitszufuhr (2) und den Flüssigkeitsabgabestellen (19) angeordneten Verweilzeitverzögerungseinrichtungen, die aufnahmefähiges, offenporiges Speichermaterial (10, 11) umfassen, **dadurch gekennzeichnet, dass** der Strömungswiderstand des Speichermaterials (10, 11) in Strömungsrichtung der Flüssigkeit, d.h. ausgehend von der Flüssigkeitszufuhr (2) in Richtung der Flüssigkeitsabgabestellen (19), zunimmt, wobei die Porengröße des Speichermaterials (10, 11) in Strömungsrichtung der Flüssigkeit abnimmt.

2. Niedriglastverteiler nach Anspruch 1, **dadurch gekennzeichnet, dass** das Speichermaterial aus mindestens zwei Schichten besteht und die weiter entfernt von der Flüssigkeitszufuhr (2) angeordnete zweite Schicht (11) eine größere Dichte aufweist als die näher an der Flüssigkeitszufuhr (2) angeordnete erste Schicht (10).

3. Niedriglastverteiler nach Anspruch 2, **dadurch gekennzeichnet, dass** zwischen der ersten Schicht (10) aus Speichermaterial und der zweiten Schicht (11) aus Speichermaterial ein erstes Wehr (14) mit voneinander beabstandeten Flüssigkeitsdurchlässen (15) angeordnet ist.

4. Niedriglastverteiler nach einem der Ansprüche 1 bis 3, **dadurch gekennzeichnet, dass** in Strömungsrichtung der Flüssigkeit nach dem Speichermaterial (10, 11) ein zweites Wehr (16) angeordnet ist, das voneinander beabstandete Tropfendurchtrittsstellen (17) aufweist.

5. Niedriglastverteiler nach einem der Ansprüche 1 bis 4, **dadurch gekennzeichnet, dass** die Austrittsstellen (8) für die Flüssigkeit in den Seitenwänden (7) der Rinnen (4) beabstandet vom Rinnenboden (9) angeordnet sind.

6. Niedriglastverteiler nach einem der Ansprüche 1 bis 5, **dadurch gekennzeichnet, dass** das Speichermaterial (10, 11) in Strömungsrichtung hinter den Austrittsstellen (8) angeordnet ist.

7. Niedriglastverteiler nach einem der Ansprüche 1 bis 6, **dadurch gekennzeichnet, dass** an den Rinnen (4) beabstandet zu den Austrittsstellen (8) Leitbleche (22) angebracht sind und das Speichermaterial (10, 11) zwischen der jeweiligen Seitenwand (7) und dem zugehörigen Leitblech (22) angeordnet ist.

8. Niedriglastverteiler nach Anspruch 7, **dadurch gekennzeichnet, dass** die Leitbleche (22) an ihren von den Rinnen abgewandten Enden mit Zacken (18) versehen sind.

9. Niedriglastverteiler nach Anspruch 7 oder 8, **dadurch gekennzeichnet, dass** jedes Leitblech (22) gebogen ist und eine Verlängerung der zugehörigen Rinne (4) ausbildet, das zweite Wehr (16) parallel zur Seitenwand (7) und in Verlängerung der jeweiligen Rinne (4) verläuft und im unteren Bereich mit dem Leitblech (22) verbunden ist, wobei an der Verbindungsstelle zwischen dem Leitblech (22) und dem zweiten Wehr (16) Halblöcher vorgesehen sind, die die Tropfendurchtrittsstellen (17) ausbilden.

10. Niedriglastverteiler nach Anspruch 9, **dadurch gekennzeichnet, dass** die Leitbleche (22) Rillen (20) zur Flüssigkeitsführung aufweisen, wobei die Rillen (20) von den Halblöchern (17) zu den Flüssigkeitsabgabestellen (19) verlaufen.

11. Niedriglastverteiler nach einem der Ansprüche 7 bis 10, **dadurch gekennzeichnet, dass** jedes der Leitbleche (22) an seinem oberen Ende mit Notüberlaufsöffnungen (21) versehen ist.

12. Niedriglastverteiler nach einem der Ansprüche 1 bis 11, **dadurch gekennzeichnet, dass** in Strömungsrichtung vor dem Speichermaterial (10, 11) ein oberes Abtropfzentrierblech (12) angeordnet ist.

13. Niedriglastverteiler nach einem der Ansprüche 1 bis 12, **dadurch gekennzeichnet, dass** jede der Rinnen (4) einzeln nivellierbar ist.

## Claims

1. Low-load distributor (1) for mass transfer columns for applying liquid onto the surface of packing stages of the mass transfer columns with at least one liquid supply (2), with a plurality of channels (4), where said liquid supply (2) leads into said channels (4) and said channels (4) comprise exit points (8) for said liquid, with a plurality of liquid dispensing points (19) and dwell time delay devices disposed between said liquid supply (2) and said liquid dispensing points (19) which comprise absorbent open-pored storage material (10, 11) **characterized in that** the flow resistance of said storage material (10, 11) increases in the flow direction of said liquid, i.e. starting from said liquid supply (2) in the direction towards said liquid dispensing points (19), wherein the pore size of said storage material (10, 11) decreases in the direction of liquid flow.

2. Low-load distributor according to claim 1, **characterized in that** said storage material is comprised of at least two layers and that the second layer (11) disposed more distant from said liquid supply (2) has a greater density than the first layer (10) disposed closer to said liquid supply (2).

3. Low-load distributor according to claim 2, **characterized in that** a first weir (14) having liquid passages (15) spaced from each other is disposed between said first layer (10) of storage material and said second layer (11) of storage material.

4. Low-load distributor according to one of the claims 1 to 3, **characterized in that** a second weir (16) having droplet passage points (17) spaced apart from each other is arranged in the direction of liquid flow downstream of said storage material (10, 11).

5. Low-load distributor according to one of the claims 1 to 4, **characterized in that** said exit points (8) for said liquid are disposed in said side walls (7) of said channels (4) spaced apart from said channel bottom (9).

6. Low-load distributor according to one of the claims 1 to 5, **characterized in that** said storage material (10, 11) is arranged in the direction of flow downstream of said exit points (8).

7. Low-load distributor according to one of the claims 1 to 6, **characterized in that** guide plates (22) are fitted at said channels (4) spaced apart from said exit points (8) and that said storage material (10, 11) is disposed between said respective side wall (7) and said associated guide plate (22).

8. Low-load distributor according to claim 7, **characterized in that** said guide plates (22) are at their ends facing away from said channels provided with jags (18).

9. Low-load distributor according to claim 7 or 8, **characterized in that** each guide plate (22) is curved forming an extension of said associated channel (4), said second weir (16) extends parallel to said side wall (7) and as an extension of the respective channel (4) and is connected to said guide plate (22) in the bottom region, where it is intended at the junction between said guide plate (22) and said second weir (16) to provide half-holes forming said droplet passage points (17).

10. Low-load distributor according to claim 9, **characterized in that** said guide plates (22) comprise grooves (20) for liquid guidance, where said grooves (20) extend from said half-holes (17) to said liquid dispensing points (19).

11. Low-load distributor according to one of the claims 7 to 10, **characterized in that** each of the guide plates (22) is at its upper end provided with emergency overflow apertures (21).

12. Low-load distributor according to one of the claims 1 to 11, **characterized in that** an upper drip centering plate (12) is disposed in the flow direction upstream of said storage material (10, 11).

13. Low-load distributor according to one of the claims 1 to 12, **characterized in that** each of said channels (4) can be leveled individually.

## Revendications

1. Système de distribution à faible charge (1) pour des colonnes d'échange de substances, destiné à l'amenée de liquide sur la surface d'étages de garniture des colonnes d'échange de substances, comprenant au moins une amenée de liquide (2), une pluralité de goulottes (4), l'amenée de liquide (2) débouchant dans les goulottes (4) et les goulottes (4) présentant des zones de sortie (8) pour le liquide, le système comprenant également une pluralité de zones de distribution de liquide (19) et des dispositifs de retenue de temporisation, qui sont agencés entre l'amenée de liquide (2) et les zones de distribution de liquide (19), et qui comportent un matériau d'accumulation et de retenue (10, 11) absorbant et à pores ouverts, **caractérisé en ce que** la résistance à l'écoulement du matériau d'accumulation et de retenue (10, 11) augmente dans la direction d'écoulement du liquide, c'est-à-dire à partir de l'amenée de liquide (2) en direction des zones de distribution de liquide (19), la grosseur des pores du matériau d'accumulation et de retenue (10, 11) diminuant dans la direction d'écoulement du liquide.

2. Système de distribution à faible charge selon la revendication 1, **caractérisé en ce que** le matériau d'accumulation et de retenue est constitué d'au moins deux couches, et la deuxième couche (11) agencée de manière plus éloignée de l'amenée de liquide (2) présente une densité plus grande que la première couche (10) agencée plus près de l'amenée de liquide (2).

3. Système de distribution à faible charge selon la revendication 2, **caractérisé en ce qu'**entre la première couche (10) de matériau d'accumulation et de retenue et la deuxième couche (11) de matériau d'accumulation et de retenue, est agencé un premier élément de barrage (14) comprenant des passages de liquide (15) espacés les uns des autres.

4. Système de distribution à faible charge selon l'une des revendications 1 à 3, **caractérisé en ce que** dans la direction d'écoulement du liquide, après le matériau d'accumulation et de retenue (10, 11) est agencé un deuxième élément de barrage (16), qui présente des zones de passage de gouttes (17) espacées les unes des autres.

5. Système de distribution à faible charge selon l'une des revendications 1 à 4, **caractérisé en ce que** les zones de sortie (8) pour le liquide sont agencées dans les parois latérales (7) des goulottes (4), à distance du fond de goulotte (9).

6. Système de distribution à faible charge selon l'une des revendications 1 à 5, **caractérisé en ce que** le matériau d'accumulation et de retenue (10, 11) est agencé, en se référant à la direction d'écoulement, après les zones de sortie (8).

7. Système de distribution à faible charge selon l'une des revendications 1 à 6, **caractérisé en ce que** sur les goulottes (4) sont placées, à distance des zones de sortie (8), des tôles déflectrices (22), et le matériau d'accumulation et de retenue (10, 11) est agencé entre la paroi latérale (7) respective et la tôle déflectrice (22) associée.

8. Système de distribution à faible charge selon la revendication 7, **caractérisé en ce que** les tôles déflectrices (22) sont pourvues de dents (18), à leurs extrémités éloignées des goulottes.

9. Système de distribution à faible charge selon la revendication 7 ou la revendication 8, **caractérisé en ce que** chaque tôle déflectrice (22) est pliée et forme un prolongement de la goulotte (4) associée, et le deuxième élément de barrage (16) s'étend parallèlement à la paroi latérale (7) et en prolongement de la goulotte (4) respective, et est relié, dans la zone inférieure, à la tôle déflectrice (22), des demi-trous, qui forment les zones de passage de gouttes (17), étant prévus au niveau de la zone de liaison entre la tôle déflectrice (22) et le deuxième élément de barrage (16).

10. Système de distribution à faible charge selon la revendication 9, **caractérisé en ce que** les tôles déflectrices (22) présentent des stries (20) pour le guidage du liquide, les stries (20) s'étendant des demi-trous (17) jusqu'aux zones de distribution de liquide (19).

11. Système de distribution à faible charge selon l'une des revendications 7 à 10, **caractérisé en ce que** chacune des tôles déflectrices (22) est pourvue à son extrémité supérieure, d'ouvertures de débordement de sécurité (21).

12. Système de distribution à faible charge selon l'une des revendications 1 à 11, **caractérisé en ce que** dans la direction d'écoulement, avant le matériau d'accumulation et de retenue (10, 11), est agencée une tôle de centrage d'égouttement (12).

13. Système de distribution à faible charge selon l'une des revendications 1 à 12, **caractérisé en ce que** chacune des goulottes (4) peut être nivelée ou mise à niveau individuellement.
